# EUROPÄISCHE PATENTSCHRIFT

(11) **EP 0 943 166 B1**
(45) Veröffentlichungstag und Bekanntmachung des Hinweises auf die Patenterteilung: **26.11.2003**
(21) Anmeldenummer: 98952569.6
(22) Anmeldetag: 14.09.1998
(51) Int. Cl.: H01R 39/16

(54) **KOMMUTATOR**
COMMUTATOR
COLLECTEUR

(30) Priorität: 08.10.1997 DE 19744357
(43) Veröffentlichungstag der Anmeldung: 22.09.1999
(73) Patentinhaber: ROBERT BOSCH GMBH, 70442 Stuttgart (DE)
(72) Erfinder: SCHMIDT, Ralf, D-77871 Renchen (DE); KIEFER, Martin, D-77704 Oberkirch (DE)
(86) Internationale Anmeldenummer: DE9802710
(87) Internationale Veröffentlichungsnummer: WO99019946

(56) Entgegenhaltungen:
- EP-A- 0 365 233
- DE-U- 8 625 147

## Beschreibung

### Stand der Technik

Die Erfindung geht aus von einem Kommutator nach der Gattung des Hauptanspruchs. Es ist schon ein Kommutator vorgeschlagen worden (deutsche Patentanmeldung 197 068 51.0), der ausgehend von einer Verbindungsstirnfläche wenigstens eine in Richtung zu einer Durchgangsbohrung hin sich erstreckende Ausnehmung hat, in die bei der Montage des Kommutators auf eine Läuferwelle Epoxidharz eindringen kann, was eine Fixierung des Kommutators auf der Läuferwelle bewirkt. Dabei bildet sich an der Verbindungsstirnfläche des Kommutators eine Wulst aus der Epoxidmasse, deren Außenkontur relativ undefiniert ist, wodurch es immer wieder zu Störungen beim Wickeln der Läuferwicklung kommt.

EP-A-0 365 233 beschreibt einen kommutator nach dem Oberbegriff des Anspruchs 1.

### Vorteile der Erfindung

Der erfindungsgemäße Kommutator mit den kennzeichnenden Merkmalen des Hauptanspruchs hat demgegenüber den Vorteil, daß auf einfache Art und Weise eine Fixierung des Kommutators mittels des an der Läuferwelle und dem Läuferkern aufgebrachten Isoliermittels (Beschichtungspulver auf Epoxidbasis) möglich ist, ohne daß eine sich bildende Wulst des Isoliermittels das Wickeln der Läuferwicklung beeinträchtigt. Hierfür kann die Durchgangsbohrung des Kommutators mit einer Spiel- oder Übergangspassung zur Läuferwelle gefertigt werden, wodurch der Kommutator bei der Montage leichtgängig auf die Läuferwelle aufgeschoben werden kann und eine Beschädigung der Oberfläche der Läuferwelle sowie innere Spannungen im Kommutator vermieden werden.

Durch die in den Unteransprüchen aufgeführten Maßnahmen sind vorteilhafte Weiterbildungen und Verbesserungen des im Hauptanspruch angegebenen Kommutators möglich.

Vorteilhaft ist es, die Aufnahmebohrung zylindrisch auszubilden, so daß sich ein großer Aufnahmequerschnitt für die Isoliermittelwulst ergibt.

Ebenfalls vorteilhaft ist es, ausgehend von der Stufe wenigstens eine Vertiefung in der Konusbohrung auszubilden, oder in der Wandung der Aufnahmebohrung wenigstens eine Vertiefung vorzusehen, um eine sichere und formschlüssige Verdrehfixierung des Kommutators mit der Läuferwelle zu gewährleisten.

### Zeichnung

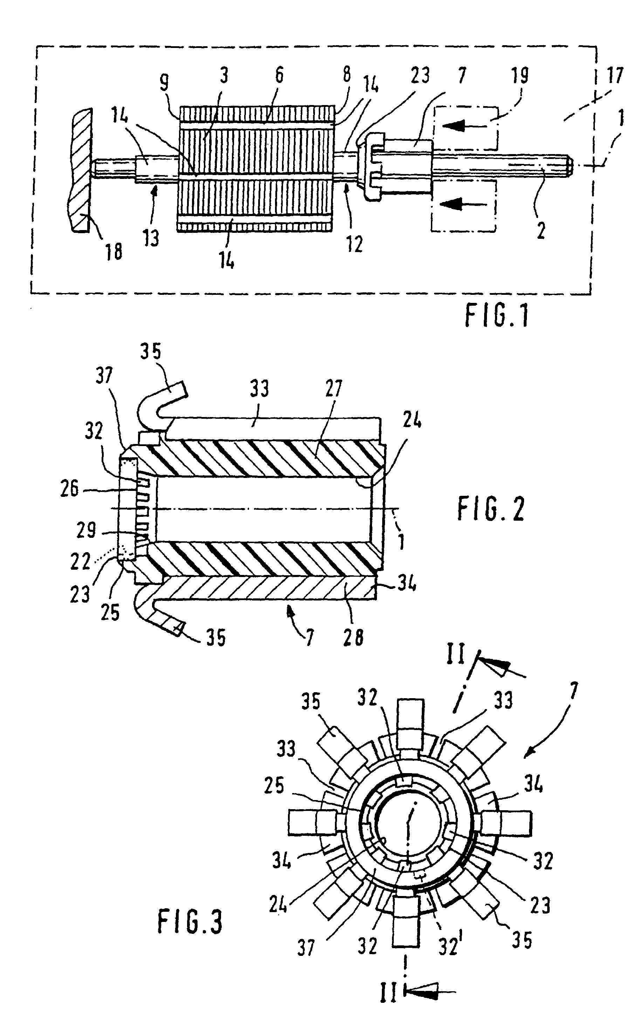

Ein Ausführungsbeispiel der Erfindung ist in der Zeichnung vereinfacht dargestellt und in der nachfolgenden Beschreibung näher erläutert. Es zeigen Figur 1 einen Läufer mit einem auf die Läuferwelle geschobenen Kommutator, Figur 2 einen erfindungsgemäß ausgebildeten Kommutator im Längsschnitt gemäß einem Schnitt entlang der Linie II-II in Figur 3, Figur 3 einen Kommutator gemäß Figur 2 in Seitenansicht.

### Beschreibung des Ausführungsbeispieles

In der Figur 1 ist ein Läufer für eine elektrische Maschine, beispielsweise für einen Elektromotor, dargestellt, mit einer Längsachse 1, mit einer koaxial dazu verlaufenden Läuferwelle 2 und mit einem koaxial auf die Läuferwelle 2 mit Preßsitz aufgeschobenen Läuferkern 3. Der Läuferkern 3 ist in bekannter Weise aus einzelnen Blechlamellen paketiert und weist mehrere parallel zur Längsachse 1 verlaufende Wicklungsschlitze 6 auf, die sich von einer einem Kommutator 7 (oder Kollektor oder Stromwender) zugewandten ersten Stirnfläche 8 bis zu einer dem Kommutator 7 abgewandten zweiten Stirnfläche 9 des Läuferkerns 3 erstrecken. Die Wicklungsschlitze 6, die erste Stirnfläche 8 sowie die zweite Stirnfläche 9 des Läuferkerns 3 und ein zwischen Läuferkern 3 und Kommutator 7 liegender erster Abschnitt 12 der Läuferwelle 2 sowie ein dem Kommutator 7 abgewandter und sich an den Läuferkern 3 anschließender zweiter Abschnitt 13 der Läuferwelle 2 sind mit einer als Isoliermittel dienenden gesinterten Epoxidschicht 14 bedeckt. Hierfür wird der Läufer ohne Kommutator in den Bereichen der Läuferwelle 2 und des Läuferkerns 3, die nicht mit einer Epoxidschicht 14 versehen werden sollen, mit Masken abgedeckt und der so ausgestattete Läufer wird in eine gestrichelt angedeutete Beschichtungsanlage 17 eingeführt, in der elektrostatisch geladenes Epoxidpulver in einem Pulverwirbelbad sich an den nicht durch Masken abgedeckten Bereichen der Läuferwelle 2 und des Läuferkerns 3 anlagert, so daß die Abschnitte 12 und 13 der Läuferwelle 2 sowie die erste Stirnfläche 8, die zweite Stirnfläche 9 und die Wicklungsschlitze 6 des Läuferkerns 3 mit einer Schicht aus Epoxidpulver bedeckt sind. Bedeckt wird auch der äußere Mantel des Läuferkerns 3. Diese Pulverschicht auf dem äußeren Mantel des Läuferkerns wird in einem Folgearbeitsgang mittels Blasen, Saugen oder Abstreifen entfernt, so daß der äußere Mantel pulverfrei ist. Danach wird die Temperatur in der Beschichtungsanlage 17 so lange erhöht, bis das Epoxidpulver auf seine Plastifizier- und Aushärtetemperatur erwärmt ist, die etwa bei 240°C liegt und bei der das Epoxidpulver zu einer zähflüssigen Masse wird. In diesem Zustand wird auf die nahe ihres zweiten Abschnittes 13 an einem Halteanschlag 18 anliegende Läuferwelle 2 der Kommutator 7 mittels eines strichpunktiert dargestellten Schiebewerkzeuges 19 derart aufgeschoben, daß die auf dem ersten Abschnitt 12 der Läuferwelle 2 vorliegende zähflüssige Epoxidschicht 14 sich zum Teil in Form einer gepunktet dargestellten Wulst 22 im Bereich einer Verbindungsstirnseite 23 des Kommutators 7 radial nach außen wölbt und in einen zwischen dem Umfang der Läuferwelle 2 und der Wandung einer Durchgangsbohrung 24 (siehe Figuren 2 und 3) gebildeten Ringspalt eindringt. Nach dem Aushärten des Epoxids und dem Abkühlen des Läufers ist der Kommutator 7 ausschließlich durch das Epoxid 14 an der Läuferwelle 2 in axialer Richtung fixiert und gegen Verdrehen gesichert. Wie in den Figuren 2 und 3 dargestellt ist, weist der Kommutator 7 einen zylindrischen Kommutatorkern 27 aus einem Duroplast auf, der von einer metallenen Leiterhülse 28, insbesondere aus Kupfer gefertigt, umgeben ist. In dem Kommutatorkern 27 verläuft die Durchgangsbohrung 24, die gegenüber dem Umfang der Läuferwelle 2 eine Spiel- oder Übergangspassung aufweist. Von der Verbindungsstirnfläche 23 ausgehend weist der Kommutator 7 eine sich in Richtung der Längsachse koaxial zur Durchgangsbohrung 24 hin erstreckende Aufnahmebohrung 25 auf, die gemäß Figur 2 bis zu einer Stufe 26 reicht. Ausgehend von der Stufe 26 schließt sich eine zur Durchgangsbohrung 24 hin verjüngende Konusbohrung 29 an, deren Durchmesser geringer als der der Aufnahmebohrung 25 ist. Die sich verjüngende Konusbohrung 29 ermöglicht ein leichtes und gleichmäßiges Eindringen des zähflüssigen Epoxids in den zwischen der Läuferwelle 2 und der Durchgangsbohrung 24 gebildeten Ringspalt. Zur besseren Fixierung des Kommutators 7 in Drehrichtung sind ausgehend von der Stufe 26 in der Konusbohrung 29 des Kommutators 7 Vertiefungen 32 im Kommutatorkern 27 vorgesehen. Wie in Figur 2 gestrichtelt angedeutet ist, können anstelle der Vertiefungen 32 auch Vertiefungen 32' in der Wandung der Aufnahmebohrung 25 vorgesehen sein. Der Querschnitt der Vertiefungen 32, 32' kann dabei rechteckförmig, dreieckförmig, halbrund oder ähnlich sein. Die vollständig innerhalb der Aufnahmebohrung 25 liegende Wulst 22 des Epoxids 14 überdeckt in radialer und axialer Richtung die Vertiefungen 32, 32' und verkrallt sich darin. Die Aufnahmebohrung 25 ist zylindrisch ausgebildet, wie in Figur 2 dargestellt ist, sie kann jedoch auch sich zur Konusbohrung 29 hin verjüngend ausgebildet sein.

In Richtung der Längsachse 1 verlaufende Kommutatorschlitze 33 durchtrennen die Leiterhülse 28 in elektrisch gegeneinander isolierte einzelne Segmente 34, die der Verbindungsstirnseite 23 zugewandt je einen Verbindungshaken 35 besitzen. Mit jedem Verbindungshaken 35 ist ein Verbindungsdraht der Läuferwicklung durch Verklemmen elektrisch verbunden.

Ausgehend von der Verbindungsstirnseite 23 verläuft auf jeden Verbindungshaken 35 ausgerichtet eine gegenüber der Längsachse 1 zu diesem hin geneigte Drahtführungsfläche 37. Auf dieser Drahtführungsfläche 37 liegt der Wicklungsdraht bei einer Umwicklung des Verbindungshakens 35 auf. Dabei führt der Draht vom Verbindungshaken 35 über die Drahtführungsfläche 37 zur Läuferwelle 2. Durch die Auflage des Drahtes wird die Schwingungsgefahr des Drahtes verringert, was zu einer höheren Schüttelfestigkeit des Läufers führt.

## Patentansprüche

1. Kommutator für eine einen Läufer mit einer Läuferwelle aufweisende elektrische Maschine, mit einem zylindrischen Kommutatorkern, mit einer axialen Durchgangsbohrung zum Aufschieben auf die Läuferwelle und mit einer quer zur Durchgangsbohrung verlaufenden Verbindungsstirnseite, **dadurch gekennzeichnet, daß** von der Verbindungsstirnseite (23) im Kommutatorkern (27) koaxial zur Durchgangsbohrung (24) eine Aufnahmebohrung (25) ausgeht, die sich bis zu einer Stufe (26) erstreckt, und sich an die Stufe (26) mit geringerem Durchmesser als dem der Aufnahmebohrung (25) eine sich zur Durchgangsbohrung (24) hin verjüngende Konusbohrung (29) anschließt.

2. Kommutator nach Anspruch 1, **dadurch gekennzeichnet, daß** die Aufnahmebohrung (25) zylindrisch ausgebildet ist.

3. Kommutator nach Anspruch 1 oder 2, **dadurch gekennzeichnet, daß** ausgehend von der Stufe (26) wenigstens eine Vertiefung (32) in der Konusbohrung (29) ausgebildet ist.

4. Kommutator nach Anspruch 1 oder 2, **dadurch gekennzeichnet, daß** in der Wandung der Aufnahmebohrung (25) wenigstens eine Vertiefung (32') vorgesehen ist.

## Claims

1. Commutator for an electrical machine, having a rotor with a rotor shaft, said commutator having a cylindrical commutator core, having an axial through-hole to enable it to be pushed onto the rotor shaft and having a connection end face which extends transversely with respect to the through-hole, **characterized in that** a retaining hole (25) starts at the connection end face (23) in the commutator core (27), coaxially with respect to the through-hole (24), and extends as far as a step (26), and a conical hole (29) which tapers towards the through-hole (24) adjoins the step (26) having a smaller diameter than that of the retaining hole (25).

2. Commutator according to Claim 1, **characterized in that** the retaining hole (25) is cylindrical.

3. Commutator according to Claim 1 or 2, **characterized in that** at least one depression (32) is formed in the conical hole (29), starting from the step (26).

4. Commutator according to Claim 1 or 2, **characterized in that** at least one depression (32') is provided in the wall of the retaining hole (25).

## Revendications

1. Commutateur pour une machine électrique présentant un rotor avec un arbre de rotor, avec un noyau cylindrique de commutateur, avec un perçage axial de bout en bout pour le coulissement sur l'arbre de rotor et avec une face frontale de liaison disposée perpendiculairement au perçage axial de bout en bout,
**caractérisé en ce qu'**
un perçage de réception (25) qui s'étend jusqu'à un étage (26) part de la face frontale de liaison (23) dans le noyau de commutateur (27) coaxialement par rapport au perçage de bout en bout (24) et un perçage conique (29) allant en se rétrécissant jusqu'au perçage de bout en bout (24), avec un diamètre inférieur à celui du perçage de réception (25), fait suite à l'étage (26).

2. Commutateur selon la revendication 1,
**caractérisé en ce que**
le perçage de réception (25) est configuré de manière cylindrique.

3. Commutateur selon la revendication 1 ou 2,
**caractérisé en ce qu'**
en partant de l'étage (26), au moins un évidement (32) est formé dans le perçage conique (29).

4. Commutateur selon la revendication 1 ou 2,
**caractérisé par**
au moins un évidement (32') dans la paroi du perçage de réception (25).
